# NEW EUROPEAN PATENT SPECIFICATION

(11) **EP 2 382 146 B2**
(45) Date of publication and mention of the opposition decision: **29.11.2017**
(45) Mention of the grant of the patent: 10.10.2012
(21) Application number: 10760006.6
(22) Date of filing: 25.08.2010
(51) Int. Cl.: B65G 47/84

(54) **A CONVEYOR FOR CONTAINERS, SUCH AS BOTTLES, TO BE PROCESSED AND FOR PROCESSED CONTAINERS FOR OPERATING MACHINES OF THE TYPE WITH A ROTARY CARROUSEL**
FÖRDERER FÜR ZU VERARBEITENDE BEHÄLTER, Z. B. FLASCHEN, SOWIE FÜR VERARBEITETE BEHÄLTER FÜR ARBEITSMASCHINEN DES TYPS MIT DREHKARUSSELL
CONVOYEUR POUR RÉCIPIENTS, TELS QUE DES BOUTEILLES, DESTINÉS À ÊTRE TRAITÉS ET POUR DES RÉCIPIENTS TRAITÉS POUR MACHINES D'ACTIONNEMENT DU TYPE À CARROUSEL ROTATIF

(30) Priority: 20.10.2009 IT VR20090171
(43) Date of publication of application: 02.11.2011
(73) Proprietor: Makro Labelling S.r.l., 46044 Goito (Mantova) (IT)
(72) Inventor: GHIZZI, Gilberto, I-46045 Mantova (IT)
(74) Representative: Lissandrini, Marco
(86) International application number: PCT/IB2010/053813
(87) International publication number: WO 2011/048508

(56) References cited:
- WO-A1-2006/077050
- DE-A1- 3 143 511
- JP-A- 2001 341 833
- US-A- 5 718 030

## Description

### Technical Field

This invention relates to a conveyor for containers, such as bottles, to be processed and for processed containers for operating machines of the type with a rotary carrousel.

In particular this invention relates to conveyors designed to connect the operating machine which has a rotary carrousel to the rest of the production line.

In particular, conveyors of this type are usually coupled with labelling, filling or capping machines, or the like (such as those described in patents EP1841547, US2009057099 and US2009014615). Therefore the invention is designed to be coupled with that type of machines, but could also be coupled with any other type of operating machines with a rotary carrousel (as, for example, illustrated in document WO2006/077050 which shows a rotary carrousel having a plurality of holding devices for bottles on its periphery).

### Background Art

As is known, in operating machines with a carrousel containers are fed one at a time by feed means, then transferred onto the carrousel. Around the carrousel there are one or more operating stations which carry out the operations required, for example applying labels, on each container which reaches them.

The containers to be processed (for example bottles) are carried to the carrousel by a first conveyor belt which runs in the direction of an infeed station in which each container will be picked up to be conveyed on the carrousel. At the carrousel outfeed the processed products will be brought to an outfeed station, then sent towards the rest of the processing line by a second conveyor belt.

Along the part of the belt close to the infeed station there are also spacing means for spacing the containers at a predetermined distance from each other so that, during conveyor operation, they arrive in the infeed station one container at a time. In general the spacing means comprise a screw feed rotating about an axis of rotation which is parallel with the direction of feed of the conveyor belt.

Close to the infeed station there is usually a first transfer star-wheel designed to transfer the containers which have arrive close to the infeed station to the carrousel. Close to the outfeed station there is a second transfer star-wheel for transferring the processed containers from the carrousel to the outfeed station.

Each star-wheel is mounted on its own supporting shaft and can rotate about the axis of rotation defined by it. Moreover, each star-wheel is operatively coupled with the feed means and spacing means (only the first transfer star-wheel is coupled with the latter). Usually, each star-wheel comprises at least one disk centred on the axis of rotation. If there are two or more disks they are arranged vertically along the axis of rotation and spaced at a predetermined distance.

Moreover, the edge each of each star-wheel is equipped with a plurality of partly open holders which are evenly spaced and each designed to accommodate a single container. In particular, in the most widespread embodiments the containers may be held between the holders (in which they are only partly inserted) and a fixed, shaped guide panel surrounding a predetermined stretch of the star-wheel (from the conveyor belt to the carrousel and vice versa along the star-wheel rotation trajectory).

Moreover, the speed of the star-wheel is controlled in such a way that the tangential speed of the holders is equal to the tangential speed of the carrousel. Each star-wheel is also positioned substantially at a tangent to the conveyor belt so that a product supported by the belt can go into or come out of a holder.

Obviously, the movements of the star-wheels, the.carrousel, the belt and the spacing means are synchronised. This is normally done by one or more mechanical transmissions located below the various elements which transmit motion to them from a carrousel movement system.

However, this first prior art technology has several disadvantages.

In particular, depending on the type of product to be processed and its dimensions, different star-wheels usually have to be used.

Consequently, when a size change-over has to be performed (that is to say, the device must be adapted to move products of a different shape and/or size), the star-wheels must be removed and substituted with the most suitable ones. In particular, the star-wheels must be removed from the respective supporting shafts and substituted with others of the most suitable size.

However, said operation is relatively time-consuming, partly due to the fact that the various parts must be fitted in such a way that they are synchronised. In some cases this may involve the need to modify even the various mechanical transmissions.

Obviously, all of this has a negative impact on plant productivity, particularly in cases in which frequent size change-overs are required.

In a second prior art technology described in patent US4467909, the problem is partly solved by rotatably mounting a plurality of pickup devices along the edge of each star-wheel. Each of these devices can rotate about its own axis of rotation which is parallel with the axis of rotation of the star-wheel and intersects the star-wheel along its edge. Along its edge each device has a plurality of curved surfaces having different dimensions, suitable for accommodating a container. Therefore, if each device is rotated relative to its axis of rotation it is possible to align a curved surface with the edge of the star-wheel according to the type of container to be processed. Each device also has fixing means for fixing the star-wheel in position.

This second prior art technology also has several disadvantages. In particular in this case the structure of the star-wheel is more complex than those of the known type. Therefore, production of the star-wheels require special working. Moreover, size change-over operations are time-consuming in terms of acting on the fixing means to release the device, rotate the pickup device until the selected curved surface is in position at the edge of the star-wheel and fix the device in place.

US 5,718,030 discloses the preamble of claim 1.

### Disclosure of the Invention

In this situation the technical purpose forming the basis of this invention is to provide a conveyor according to claim 1 for products to be processed and for processed products for operating machines of the type with a rotary carrousel which overcomes the above-mentioned disadvantages.

In particular, the technical purpose of this invention is to provide a device for feeding products to be processed and picking up processed products for operating machines of the type with a rotary carrousel which allows size change-over operations to be performed faster than for the prior art devices without complicating the structure of the mechanical parts associated with the size change-over.

The technical purpose specified and the aims indicated are substantially achieved by a conveyor for containers, such as bottles, to be processed and for processed containers for operating machines of the type with a rotary carrousel as described in the appended claims.

### Brief Description of the Drawings

Further features and the advantages of this invention are more apparent in the detailed description of a preferred, non-limiting embodiment of a conveyor for containers illustrated in the accompanying drawings, in which:
- Figure 1 is a schematic top view of a conveyor for containers according to this invention, coupled with a carrousel of an operating machine, in a first operating condition for moving containers of a first type;
- Figure 2 is a view of the conveyor for containers of Figure 1, in a different operating position;
- Figure 3 is a view of the conveyor for containers of Figure 1 in a second operating condition in which containers of a second type are moved; and
- Figure 4 is a view of the conveyor for containers of Figure 3, in a different operating position.

### Detailed Description of the Preferred Embodiments of the Invention

With reference to the accompanying drawings, the numeral 1 denotes as a whole a conveyor for containers 2, such a bottles, to be processed and for processed containers 2 for operating machines of the type with a rotary carrousel 3, made in accordance with this invention.

The conveyor 1 according to this invention comprises first feed means 7 for feeding the containers 2 to an infeed station 4 along a feed path 5. Similarly, at an outfeed station 6 there are second feed means 8 for picking up the processed containers 2. The conveyor 1 also comprises a first transfer star-wheel 9 able to rotate about its own first axis of rotation 10, for transferring the containers 2 to be treated from the infeed station 4 to a carrousel 3, and a second transfer star-wheel 11 able to rotate about its own second axis of rotation 12, which is parallel with the first axis 10, for transferring the processed containers 2 from the carrousel 3 to the outfeed station 6.

The first feed means 7 and/or the second feed means 8 preferably comprise a conveyor belt 13 on which in practice the containers 2 are positioned. In a first embodiment the first feed means 7 are a first conveyor belt and the second feed means 8 are a second conveyor belt.

In contrast, in the preferred embodiment illustrated in the accompanying drawings the first feed means and the second feed means 8 are advantageously a single conveyor belt 13 which feeds the container 2 to the infeed station 4 and picks them up from the outfeed station 6. In this way there is no need to synchronise the first feed means 7 and the second feed means 8 with each other and, for example, to install systems for the transmission of motion between the two.

In practice, the conveyor belt 13 illustrated in the accompanying drawings moves from left to right.

The conveyor 1 also comprises spacing means 14 which are operatively coupled with the first feed means 7 in such a way that the containers 2 arrive in the infeed station 4 spaced from each other. In the embodiment illustrated in the accompanying drawings the spacing means 14 are coupled with a part of the conveyor belt 13 close to the infeed station 4.

In the preferred embodiment illustrated in the accompanying drawings the spacing means 14 comprise a screw feeder 15 able to rotate about a third axis of rotation 29 which is substantially parallel with the feed path 5 and transversal to the first axis 10 and the second axis 12. The screw feeder 15 comprises a helicoidal channel 16 having its own pitch and a channel 16 width and depth.

In some embodiments the screw feeder 15 comprises a helicoidal channel 16 whose shape is such that it can operate on containers 2 of different types and which therefore have different shapes and sizes. In particular, the width of the channel 16 is reduced from the outer surface towards the inside (towards the third axis 29). In this way, any type of container 2 which is within a predetermined range of sizes makes contact with the screw feeder 15, entering more (in the case of a smaller container 2) or less (in the case of a larger container 2) in the helicoidal channel 16. If containers 2 whose size is significantly outside the predetermined range have to be processed, the screw feeder 15 must be changed. Therefore, the screw feeder 15 is coupled with change-over means for removing one screw feeder 15 and substituting it with another, depending on the containers 2 to be processed.

Moreover, the screw feeder 15 may be of the type with a constant pitch (like the one schematically illustrated in the accompanying drawings) or of the type with a variable pitch (not illustrated). The different types of screw feeders 15 are not described in detail herein, since they are of the known type. Moreover, their operation is also known in the sector for processing containers 2, in particular, bottles. In the accompanying drawings, the screw feeder 15 is schematically illustrated only in order to identify the spacing means 14.

The first transfer star-wheel 9 is positioned close to the infeed station 4 and is operatively coupled with the first feed means 7 and the first spacing means 14, for picking up one container 2 at a time from the infeed station 4 and bringing it to a carrousel 3 of an operating machine. Similarly, the second transfer star-wheel 11 is positioned close to the outfeed station 6, for picking up a processed container 2 from the carrousel 3 and bringing it to the outfeed station 6.

Each star-wheel is also coupled with rotation means designed to make it rotate. The edge of each star-wheel forms a plurality of partly open holders 17 for accommodating each container 2. In the preferred embodiment illustrated in the accompanying drawings each transfer star-wheel comprises at least one circular disk which is coaxial with the axis of rotation. Each holder 17 is a part of a cylindrical surface 18 made on the edge of the disk. The part of the cylindrical surface 18 may be defined as a portion of the inner lateral surface of a hollow cylinder whose main axis of extension is parallel with the axis of rotation of the respective star-wheel and positioned close to the edge of the disk but outside the disk.

In an alternative embodiment each star-wheel may comprise two or more disks which are positioned along the axis of rotation of the star-wheel and vertically spaced from each other. Moreover, the disks are positioned in such a way that each holder 17 of a disk is axially aligned with a corresponding holder 17 of another disk. In this way, during use two or more disks together form single holders, each holder thus making contact with two or more parts of a container 2 in such a way as to transfer it in a more secure fashion from and towards the carrousel 3.

According to this invention the holders 17 of each transfer star-wheel form an alternating sequence, along the edge of the star-wheel, of at least two different types 19, 20 of holders 17. In the preferred embodiment the different types 19, 20 can be distinguished because they are formed by surfaces of hollow cylinders which have different radii.

For example, in the accompanying drawings each star-wheel comprises two different types 19, 20 of holders 17. The holders 17 of a first type 19 are formed by an inner surface of a hollow cylinder having a radius greater than the inner surface of a hollow cylinder forming the second type 20 of holder 17.

Alternatively, each holder 17 may have a shape which is different to that of a cylindrical surface, for example it may be a V-shaped holder. In that case, holders of different types 19, 20 are different types of V shapes (for example having different angles or lengths). In other embodiments the holder may comprise pickup means to facilitate the insertion of a container 2 in it (obviously, in that case the different types 19, 20 of holders 17 will comprise pickup means of different sizes). None of these different types 19, 20 of holder are described in detail herein, since they are of the known type.

The different types 19, 20 of holders 17 can be distinguished by their shape and/or size. Preferably, in the embodiment illustrated in the accompanying drawings the two different types 19, 20 of holders 17 are only distinguished by size. In particular, each type of holder 17 is suitable for accommodating the containers 2 which are within a predetermined range of sizes.

In the embodiment illustrated in the accompanying drawings, the angle X between the radial directions which pass through the axis of rotation and the axis of the hollow cylinder (a portion of whose inner surface forms the holder 17) is preferably 55°. Moreover, in the embodiment illustrated in the accompanying drawings, as can be seen, between the two types 19, 20 of holders 17 it would be possible to define (along the edge of each star-wheel) further other types 19, 20 of holders 17 of different sizes, for example with dimensions less than or greater than those of the holders 17 already present. Therefore, the smaller the above-mentioned angle X is, the more holders 17 can be formed along the edge of the star-wheel. However, the angle X must in any case be greater than a minimum value given by the size of the largest type of holder 17 (otherwise two holders 17 could overlap) of the respective star-wheel.

The conveyor 1 according to this invention also comprises synchronising means coupled with each star-wheel for synchronising a selected type of holder 17 with the carrousel 3 and with the spacing means 14. When the type of container 2 to be processed is selected each star-wheel must be rotated in such a way that each holder 17 of the required type (that suitable for accommodating the selected container 2) is at a seat 21 (where in practice the containers 2 are placed) of the carrousel, when it is at the point where the star-wheel is at a tangent to the carrousel 3 (which is the point where a container 2 passes from the star-wheel to the carrousel 3 or vice versa). Once each star-wheel has been synchronised with the carrousel 3, the spacing means 14 must be synchronised with the first star-wheel 9. In particular, when a holder 17 of one type is at the infeed station 4, the helicoidal channel 16 must be opposite the holder 17.

In the case of the first star-wheel 9, the synchronising means allow, before operation of the conveyor 1, adjustment of the position of each star-wheel relative to a respective first supporting shaft 22 (positioned on the axis of rotation) in such a way that the desired type of holder 17 is positioned correctly.

Similarly, the synchronising means are coupled with the second transfer star-wheel 11 for making it rotate relative to its second supporting shaft 23 until it is in the correct position.

The synchronising means in a first embodiment may be of the mechanical fit type for positioning each star-wheel relative to the respective supporting shaft. In particular, the synchronising means may comprise a pair of elements that can be fitted together and which are connected to the star-wheel and to the respective supporting shaft for positioning each star-wheel at various predetermined angles.

In the preferred embodiment the star-wheels are coupled with an independent motor which is controlled by a control unit, for controlling the movement of each star-wheel independently of the rest of the conveyor 1. In this case, the synchronising means are the control unit itself, which can make each star-wheel rotate to the desired position (this embodiment is described in more detail below).

Also according to this invention, the conveyor 1 may be coupled with a carrousel 3 of an operating machine, for feeding to the carrousel and picking up from it at least two types 19, 20 of containers 2 differing in their shape and/or dimensions which can be accommodated respectively in a first type 19 and in a second type 20 of the holders 17.

In the embodiment illustrated in the accompanying drawings, the carrousel 3 can rotate about a main axis of rotation 24, parallel with the first axis 10 and the second axis 12, and comprises a plurality of seats 21 (already referred to above) which are distributed at its edge. Each star-wheel can be coupled with the carrousel 3 in such a way that, in practice, each holder 17 of one type is located, at least for a predetermined time period, at a seat 21.

In particular the star-wheels are positioned in such a way that each of their holders 17 of the selected type is positioned at a seat 21 of the carrousel 3 at the moment when it is aligned along a line Y which is radial relative to the carrousel 3 and passing through the centre of the respective star-wheel. In the preferred embodiment each seat 21 of the carrousel 3 comprises a circular lower plate, whose centre lies on a circular line Z centred on the main axis of rotation 24. When a holder 17 of the selected type is at a seat 21 of the carrousel 3 (in practice, at the moment a container 2 is transferred) the circular line Z passes through the centre of the hollow cylinder whose inner surface 18 forms the holder 17 considered.

Moreover, the rotation of each star-wheel can be synchronised with the rotation of the carrousel 3 in such a way that during its rotation a holder 17 of the selected type is located at a first seat 21, and the next holder 17 of the same type is located at a second seat 21 which comes after the first. Moreover, the speed of each star-wheel is controlled in such a way that the tangential speed of the holders 17 is equal to the tangential speed of the seats 21 of the carrousel 3.

Therefore, in practice, the time needed to cover the arc between two consecutive seats 21 of the carrousel 3 must be equal to the time needed to cover the arc between two consecutive holders 17 of the same type.

At the same time the conveyor belt 13 feed speed can be synchronised with the speed of rotation of each transfer star-wheel in such a way that the difference between the feed speed of a container 2 along the belt 13 (during its transfer from belt to the star-wheel and vice versa) and the tangential speed of the respective star-wheel at the infeed station 4 and the outfeed station is practically null. This avoids differences in speed which could result in some containers 2 getting damaged. At the same time, the speed of rotation of the screw feeder 15 can be synchronised with the conveyor belt 13 in such a way that the containers 2 which are fed on the belt 13 are inserted in a stretch of the helicoidal channel 16 in such a way that they are fed spaced from each other towards the infeed station 4.

The conveyor 1 according to this invention also comprises guide means 25 for guiding a container 2 accommodated in a holder 17 during rotation of the first star-wheel 9 and/or of the second star-wheel 11. In the preferred embodiment the guide means 25 comprise a first panel 26 positioned at the first star-wheel 9 and a second panel 27 positioned at the second star-wheel 11 along the stretch in which a container 2 can be accommodated in a holder 17 respectively from the infeed station 4 to the carrousel 3 of an operating machine and from the carrousel 3 to the outfeed station 6. In the embodiment illustrated in the accompanying drawings the two panels 26, 27 form a single structure 28 positioned between the two star-wheels and comprising a first part facing the first star-wheel 9 and a second part which is opposite the first part and facing the second star-wheel 11.

In the accompanying drawings the first part is formed by a stretch of a cylindrical surface centred on the axis of rotation of the first star-wheel 9, whilst the second part is formed by a stretch of a cylindrical surface centred on the axis of rotation of the second star-wheel 11. Advantageously, in practice, a container 2 present in the infeed station 4 is carried by the respective holder 17 towards the panel 28. In this way, the container 2 is held in a position between the holder 17 and the panel 28 (during the transfer from the infeed station 4 towards the carrousel 3).

The panel 28 is preferably interchangeable, so that it can be adapted to the type of holder 17 selected. The container 2 accommodated in the selected holder 17 is advantageously between the holder 17 and the stretch of cylindrical surface facing each star-wheel. In particular, the maximum distance between the holder 17 and the cylindrical surface which forms the panel 28 in the direction radial to the star-wheel is at least equal to (advantageously slightly greater than) the width of the container 2. Therefore, if the selected type of holder 17 is changed, the type of panel 28 must be changed.

In accordance with this invention, in a first embodiment the rotation means comprise at least one mechanical transmission connected to the first star-wheel and to the second star-wheel 11 and which can be coupled with a carrousel 3 movement system. In this case, the carrousel 3 movement system preferably comprises a motor connected to the carrousel 3 for making it rotate. The motor is also connected to the mechanical transmission which also transfers the movement of the motor to the star-wheels and if necessary to the feed and spacing means. Therefore, synchronisation of the various parts (the carrousel 3, the star-wheels, the feed means and the spacing means 14) is achieved by a mechanical connection between the parts. In this case, depending on the choice of the type of container 2 to be processed, each star-wheel will be equipped with synchronising means of the mechanical fit type.

In a second preferred embodiment the rotation means comprise at least one motor (as indicated above) connected to the first star-wheel 9 and/or to the second star-wheel 11 and mechanically independent of the carrousel 3 movement system. In particular, it is possible that there is only one motor connected to both star-wheels or two motors, one per star-wheel. In this case the rotation means also comprise the electronic control unit (indicated above) for controlling the motor or motors and for synchronising the rotation of each star-wheel with the rotation of the carrousel 3. The control unit will preferably synchronise the rotation of each star-wheel with the rotation of the carrousel 3. As already indicated, the synchronising means will be part of the control unit which will synchronise each star-wheel based on the type of container 2 selected, before operation of the conveyor 1 and of the operating machine with which it is coupled.

This invention also relates to an operating machine for processing containers 2, such as bottles, comprising a rotary carrousel 3 and a conveyor 1 of the type described above coupled with the carrousel 3. The operating machine may be of any type, but may preferably be a labelling, capping, filling, sealing machine or the like.

Operation of the conveyor 1 according to this invention derives directly from what is described above.

First, the type of container 2 to be processed must be defined. That is to say, the size and shape of each container 2 must be checked. Then, the type of holder 17 for each star-wheel, suitable for accommodating the container 2, is selected.

At this point an operation must be performed to synchronise each star-wheel with the carrousel 3. As already indicated, synchronisation may be performed using an electronic control unit, or by mechanical fit for each star-wheel on the respective supporting shaft, depending on the type of movement selected.

If an electronic control unit is present, synchronisation is performed by controlling the motor coupled with the supporting shaft of the control unit and making it perform a partial rotation until the synchronisation conditions described above are achieved. If synchronisation is of the mechanical fit type, the star-wheel must be rotated manually relative to the shaft and fitted into place at the correct angle.

In a first case a screw feeder 15 suitable for the type of containers 2 to be processed must also be selected (it could therefore be necessary to change it for another thanks to the change-over means). In a second case the screw feeder 15 is already set up to operate with any type of container 2. Also according to the type of holder 17 selected, a panel 28 must be substituted with another having suitable dimensions to allow the transfer of a container 2 from the infeed station 4 to the carrousel 3 and vice versa.

At this point the screw feeder 15 must by synchronised with the first star-wheel 9 in such a way that the type of holder 17 required is present at the infeed station 4 at the moment when a container 2 reaches it.

When the conveyor 1 is activated, the speed of rotation of the carrousel 3 must be synchronised with the speed of rotation of each star-wheel in such a way that the tangential speed of the holders 17 is equal to the tangential speed of the seats 21 of the carrousel 3. The conveyor belt 13 feed speed and the speed of rotation of the screw feeder 15 must also be synchronised with the respective star-wheel.

Once these initial operations have been done, the containers 2 can be inserted in the conveyor 1. The containers are then fed on the conveyor belt 13 along the feed path 5 in the direction of the infeed station 4. From this point onwards operation is the same as that of a conveyor 1 of the known type coupled with the carrousel 3 of an operating machine.

The size change-over operations (that is to say, when the type of container 2 to be processed is to be changed), require repetition of the initial synchronising operations relative to a new type of holder 17 selected. In particular, each star-wheel must be rotated relative to the respective supporting shaft through the angle X between a holder 17 of the previous selected type and the holder 17 of the new type. In the embodiment illustrated in the accompanying drawings, if a size change-over is necessary, each star-wheel must be rotated though the angle X of 55°. The rotation must be clockwise or anti-clockwise depending whether or not one wants to pass from a first type 19 to a second type 20 or vice versa.

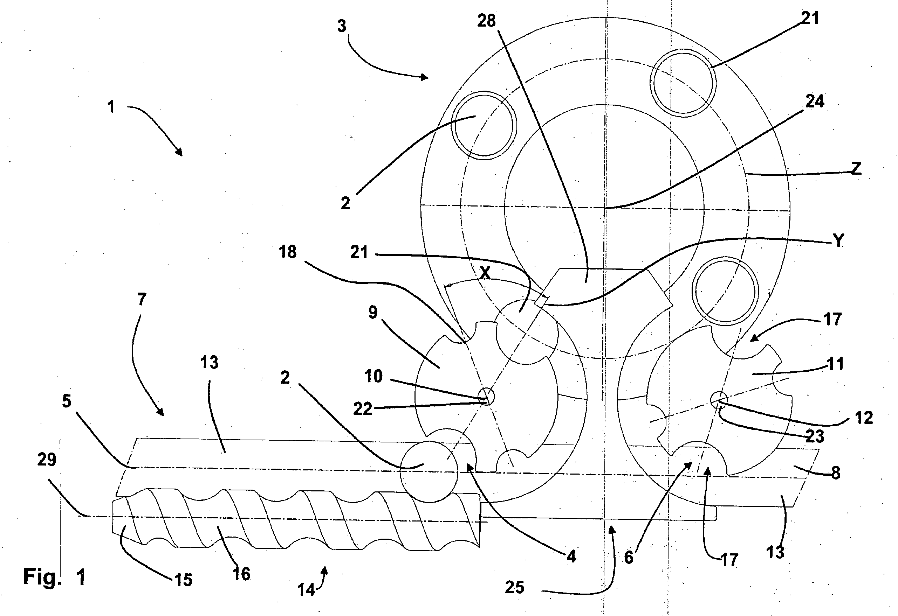

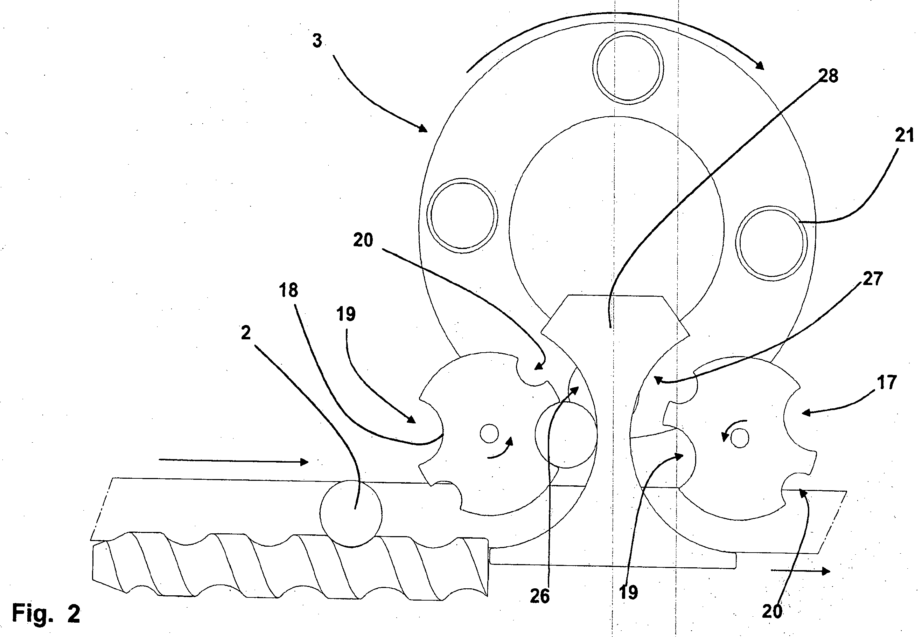

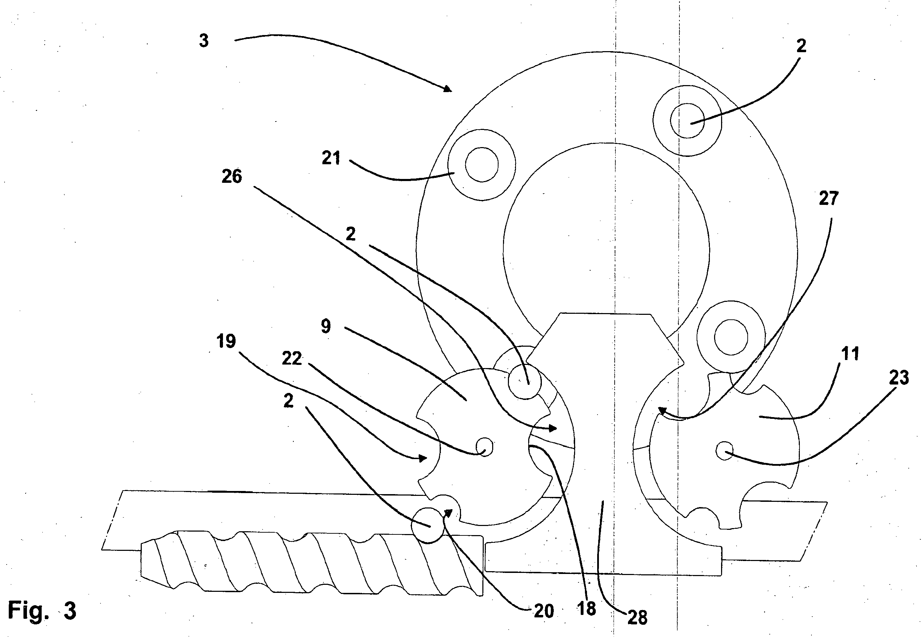

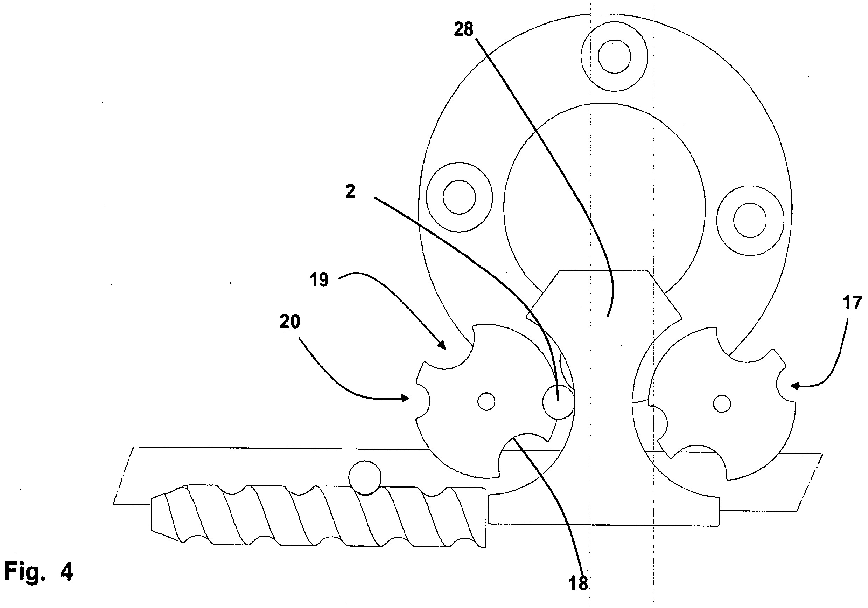

Figures 1 and 2 show two operating steps of a conveyor 1 coupled with a carrousel 3 for processing a first type of containers 2 in which each star-wheel is in a first and a second position relative to a first type of holder 17 selected. Figures 3 and 4 in contrast shown two steps for processing a second type of containers 2 which correspond to the steps illustrated in Figures 1 and 2 but relate to a second type of holder 17 selected.

This invention brings important advantages.

Thanks to the conveyor of this invention it is possible to perform size change-overs for the containers to be processed rapidly and without changing the transfer star-wheels by uncoupling them from the supporting shafts. Each star-wheel also has a simple structure which is easy to produce.

It is also possible to couple with the conveyor an electronic synchronising system (for use after a size change-over) which makes size change-over operations even more rapid.

It should also be noticed that this invention is relatively easy to produce and that even the cost linked to implementing the invention is not very high.

The invention described above may be modified and adapted in several ways without thereby departing from the scope of the inventive concept.

Moreover, all details of the invention may be substituted with other technically equivalent elements and in practice all of the materials used, as well as the shapes and dimensions of the various components, may vary according to requirements.

## Claims

1. A conveyor (1) for containers (2), such as bottles, to be processed and for processed containers (2) for operating machines of the type with a rotary carrousel (3), comprising:
first feed means (7) for feeding the containers (2) to an infeed station (4) along a feed path (5);
spacing means (14), operatively coupled with the first feed means (7), for spacing out the containers (2) to be processed before the infeed station (4);
a first transfer star-wheel (9) able to rotate about a first axis of rotation (10) and positioned close to the infeed station (4) and operatively coupled with the first feed means (7) and the first spacing means (14), for picking up one container (2) at a time from the infeed station (4) and bringing it to an operating machine carrousel (3);
second feed means (8) for picking up the processed containers (2) from an outfeed station (6);
a second transfer star-wheel (11) able to rotate about a second axis of rotation (12) which is parallel with the first axis (10) and positioned close to the outfeed station (6), for picking up a processed container (2) from the carrousel (3) and bringing it to the outfeed station (6);
rotation means for driving the rotation of the first star-wheel (9) and the second star-wheel (11);
the edge of each star-wheel forming a plurality of holders (17) for accommodating each container (2, the holders (17) of each transfer star-wheel forming an alternating sequence, along the edge of the star-wheel, of at least two different types (19), (20) of holders (17); there being the possibility of coupling the conveyor (1) with an operating machine carrousel (3) for feeding to the carrousel and picking up from it at least two types (19), (20) of containers (2) differing in their shape and/or dimensions which can be accommodated respectively in a first type (19) and in a second type (20) of the holders (17), **characterised in that** each star-wheel is formed by at least one circular disk which is coaxial with the axis of rotation; each holder (17) being formed by a part of a cylindrical surface (18) made on the edge of the disk.

2. The conveyor (1) according to any of the foregoing claims, **characterised in that** it comprises synchronising means coupled with each star-wheel for synchronising a selected type of holder (17) with the spacing means (14) and with the carrousel (3).

3. The conveyor (1) according to any of the foregoing claims, **characterised in that** it can be coupled with a carrousel (3) able to rotate about a main axis of rotation (24), parallel with the first axis (10) and the second axis (12), and comprising a plurality of seats (21) at the edge of the carrousel (3); there being the possibility of coupling each star-wheel with the carrousel (3) in such a way that, in practice, each holder (17) of one type is, at least for a predetermined period of time, at a seat (21).

4. The conveyor (1) according to claim 3, **characterised in that**, in practice, the rotation of each star-wheel can be synchronised with the rotation of the carrousel (3) in such a way that during the rotation a holder (17) of one type is positioned at a first seat (21), and the next holder (17) of the same type is positioned at a second seat after the first.

5. The conveyor (1) according to any of the foregoing claims, **characterised in that** the first feed means (7) and/or the second feed means (8) comprise a conveyor belt (13) on which the containers (2) are positioned.

6. The conveyor (1) according to any of the foregoing claims, **characterised in that** the spacing means (14) comprise a screw feeder (15) able to rotate along a third axis of rotation (29) which is transversal to the first axis and the second axis of rotation (12) and substantially parallel with the feed path (5).

7. The conveyor (1) according to claim 6, **characterised in that** the screw feeder (15) comprises a helicoidal channel (16) having its own pitch and its own channel depth and width; at least the channel (16) depth and width being defined in such a way that containers (2) having a range of different shapes and/or dimensions can be accommodated.

8. The conveyor (1) according to claim 6 or 7, **characterised in that** it comprises change-over means coupled with the screw feeder (15) for removing one screw feeder (15) and substituting it with another, depending on the different types of containers (2) to be processed.

9. The conveyor (1) according to any of the foregoing claims, **characterised in that** it comprises guide means (25) for guiding a container (2) accommodated in a holder (17) during rotation of the first star-wheel (9) and/or of the second star-wheel (11).

10. The conveyor (1) according to claim 9, **characterised in that** the guide means (25) comprise a panel (28) positioned at the first star-wheel and the second star-wheel (11) along the stretch in which a container (2) is accommodated in a holder (17) respectively from the infeed station (4) to an operating machine carrousel (3) and from the carrousel (3) to the outfeed station (6); the panel (28) being formed by a stretch of a cylindrical surface centred on the axis of rotation of each star-wheel.

11. The conveyor (1) according to any of the foregoing claims, **characterised in that** the rotation means comprise at least one mechanical transmission connected to the first star-wheel and to the second star-wheel (11) and which can be coupled with a carrousel (3) movement system.

12. The conveyor (1) according to claims 2 and 11, **characterised in that** the synchronising means comprise a plurality of mechanical fit elements for positioning each star-wheel relative to the respective axis of rotation.

13. The conveyor (1) according to any of the claims from 1 to 10, **characterised in that** the rotation means comprise at least one motor connected to the first star-wheel and/or to the second star-wheel (11) and an electronic control unit for synchronising the rotation of each star-wheel with the rotation of the carrousel (3).

14. The conveyor (1) according to claims 2 and 13, **characterised in that** the synchronising means are included in the electronic control unit.

15. An operating machine for processing containers (2), such as bottles, comprising a rotary carrousel (3), **characterised in that** it also comprises a conveyor (1) according to any of the foregoing claims which is coupled with the carrousel (3).

## Patentansprüche

1. Förderer (1) für zu verarbeitende Behälter (2), z. B. Flaschen, sowie für verarbeitete Behälter (2) zum Betrieb von Maschinen mit Drehkarussell (3), umfassend:
erste Zuleitmittel (7) zum Zuleiten der Behälter (2) zu einer Zuführstation (4) entlang einer Zuleitbahn (5);
Beabstandungsmittel (14), die mit den ersten Zuleitmitteln (7) wirkverbunden sind, um die zu verarbeitenden Behälter (2) vor der Zuführstation (4) zu beabstanden;
ein erstes Übertragungssternrad (9), das dazu fähig ist, sich um eine erste Drehachse (10) zu drehen und das nahe der Zuführstation (4) positioniert und mit den ersten Zuleitmitteln (7) und den ersten Beabstandungsmitteln (14) wirkverbunden ist, um einen Behälter (2) nach dem anderen von der Zuführstation (4) aufzunehmen und zu einem Arbeitsmaschinenkarussell (3) zu bringen;
zweite Zuleitmittel (8) zur Aufnahme der verarbeiteten Behälter (2) von einer Ausführstation (6);
ein zweites Übertragungssternrad (11), das dazu fähig ist, sich um eine zweite Drehachse (12) zu drehen, die parallel zur ersten Achse (10) ist und nahe der Ausführstation (6) positioniert ist, um einen verarbeiteten Behälter (2) vom Karussell (3) aufzunehmen und ihn zur Ausführstation (6) zu bringen;
Drehmittel zum Antrieb der Drehung des ersten Sternrades (9) und des zweiten Sternrades (11);
wobei der Rand eines jeden Sternrades eine Vielzahl von Halterungen (17) zur Aufnahme eines jeden Behälters (2) bildet, die Halterungen (17) eines jeden Übertragungssternrades entlang des Randes des Sternrandes eine alternierende Sequenz mindestens zwei unterschiedlicher Typen (19), (20) von Halterungen (17) bilden, wobei die Möglichkeit des Verkoppelns des Förderers (1) mit einem Arbeitsmaschinenkarussell (3) zum Zuleiten mindestens zweier Typen (19), (20) von sich in ihrer Form und/oder Größe unterscheidenden Behältern (2) zum Karussell und zur Aufnahme davon besteht, die jeweils in einem ersten Typ (19) und in einem zweiten Typ (20) der Halterungen (17) aufgenommen werden können;
**dadurch gekennzeichnet, dass** jedes Sternrad durch mindestens eine runde Scheibe gebildet wird, die koaxial mit der Drehachse ist, wobei jede Halterung (17) durch einen Teil einer zylindrischen Oberfläche (18) gebildet wird, die auf dem Rand der Scheibe ausgebildet ist.

2. Förderer (1) nach einem der vorangehenden Ansprüche, **dadurch gekennzeichnet, dass** er Synchronisierungsmittel umfasst, die mit jedem Sternrad zur Synchronisierung eines ausgewählten Typs einer Halterung (17) mit den Beabstandungsmitteln (14) und mit dem Karussell (3) verkoppelt sind.

3. Förderer (1) nach einem der vorangehenden Ansprüche, **dadurch gekennzeichnet, dass** er mit einem Karussell (3) verkoppelbar ist, das dazu fähig ist, sich um eine Hauptdrehachse (24) zu drehen, die parallel zur ersten Achse (10) und zweiten Achse (12) ist, und umfassend eine Vielzahl von Aufnahmen (21) am Rand des Karussells (3), wobei die Möglichkeit des Verkoppelns eines jeden Sternrades mit dem Karussell (3) besteht, sodass praktisch jede Halterung (17) eines Typs zumindest für einen bestimmten Zeitraum an einer Aufnahme (21) ist.

4. Förderer (1) nach Anspruch 3, **dadurch gekennzeichnet, dass** die Drehung eines jeden Sternrades praktisch mit der Drehung des Karussells (3) so synchronisierbar ist, dass während der Drehung eine Halterung (17) eines Typs an einer ersten Aufnahme (21) positioniert ist und die nächste Halterung (17) desselben Typs an einer zweiten Aufnahme nach der ersten positioniert ist.

5. Förderer (1) nach einem der vorangehenden Ansprüche, **dadurch gekennzeichnet, dass** die ersten Zuleitmittel (7) und/oder die zweiten Zuleitmittel (8) ein Förderband (13) umfassen, auf dem die Behälter (2) positioniert sind.

6. Förderer (1) nach einem der vorangehenden Ansprüche, **dadurch gekennzeichnet, dass** die Beabstandungsmittel (14) einen Schneckenförderer (15) umfassen, der dazu fähig ist, sich entlang einer dritten Drehachse (29) zu drehen, die transversal zur ersten und zweiten Drehachse (12) und im Wesentlichen parallel zur Zuleitbahn (5) ist.

7. Förderer (1) nach Anspruch 6, **dadurch gekennzeichnet, dass** der Schneckenförderer (15) einen schraubenförmigen Kanal (16) umfasst, aufweisend seine eigene Steigung und seine eigene Kanaltiefe und -breite, wobei zumindest die Tiefe und Breite des Kanals (16) so definiert sind, dass die Behälter (2), aufweisend eine Reihe unterschiedlicher Formen und/oder Größen, aufgenommen werden können.

8. Förderer (1) nach Anspruch 6 oder 7, **dadurch gekennzeichnet, dass** er Umstellmittel umfasst, die mit dem Schneckenförderer (15) verkoppelt sind, um in Abhängigkeit von den unterschiedlichen zu verarbeitenden Behältertypen (2) einen Schneckenförderer (15) zu entfernen und ihn mit einem anderen zu ersetzen.

9. Förderer (1) nach einem der vorangehenden Ansprüche, **dadurch gekennzeichnet, dass** er Führungsmittel (25) zum Führen eines Behälters (2) umfasst, der während der Drehung des ersten Sternrades (9) und/oder des zweiten Sternrades (11) in einer Halterung (17) aufgenommen ist.

10. Förderer (1) nach Anspruch 9, **dadurch gekennzeichnet, dass** die Führungsmittel (25) eine Tafel (28) umfassen, die am ersten Sternrad und zweiten Sternrad (11) entlang dem Abschnitt positioniert ist, in dem ein Behälter (2) in einer Halterung (17) jeweils von der Zuführstation (4) zu einem Arbeitsmaschinenkarussell (3) und vom Karussell (3) zur Ausführstation (6) aufgenommen wird, wobei die Tafel (28) durch einen Abschnitt einer zylindrischen Oberfläche gebildet wird, die auf der Drehachse eines jeden Sternrades zentriert ist.

11. Förderer (1) nach einem der vorangehenden Ansprüche, **dadurch gekennzeichnet, dass** die Drehmittel mindestens eine mechanische Übertragung umfassen, die mit dem ersten Sternrad und mit dem zweiten Sternrad (11) verbunden ist und die mit einem Bewegungssystem des Karussells (3) verkoppelbar ist.

12. Förderer (1) nach den Ansprüchen 2 und 11, **dadurch gekennzeichnet, dass** die Synchronisierungsmittel eine Vielzahl mechanischer Einpassungselemente zum Positionieren eines jeden Sternrades relativ zur entsprechenden Drehachse umfassen.

13. Förderer (1) nach einem der Ansprüche 1 bis 10, **dadurch gekennzeichnet, dass** die Drehmittel mindestens einen Motor, der mit dem ersten Sternrad und/oder dem zweiten Sternrad (11) verbunden ist sowie eine elektronische Steuereinheit zur Synchronisierung der Drehung eines jeden Sternrades mit der Drehung des Karussells (3) umfassen.

14. Förderer (1) nach den Ansprüchen 2 und 13, **dadurch gekennzeichnet, dass** die Synchronisierungsmittel in der elektronischen Steuereinheit beinhaltet sind.

15. Arbeitsmaschine zur Verarbeitung von Behältern (2), z. B. Flaschen, umfassend ein Drehkarussell (3), **dadurch gekennzeichnet, dass** sie ferner einen Förderer (1) nach einem der vorangehenden Ansprüche umfasst, der mit dem Karussell (3) verkoppelt ist.

## Revendications

1. Convoyeur (1) pour récipients (2), tels que des bouteilles, destinés à être traités et pour des récipients traités (2) pour machines d'actionnement du type à carrousel rotatif (3), comprenant :
des premiers moyens d'acheminement (7) pour acheminer les récipients (2) vers un poste d'entrée (4) le long d'une trajectoire d'acheminement (5) ;
des moyens d'écartement (14), opérationnellement accouplés aux premiers moyens d'acheminement (7), pour écarter les récipients (2) destinés à être traités avant le poste d'entrée (4) ;
une première roue étoile de transfert (9) capable de tourner autour d'un premier axe de rotation (10) et placée à proximité du poste d'entrée (4) et opérationnellement accouplée aux premiers moyens d'acheminement (7) et aux premiers moyens d'écartement (14), pour prélever un récipient (2) à la fois au poste d'entrée (4) et pour l'amener à un carrousel (3) d'une machine d'actionnement ;
des seconds moyens d'acheminement (8) pour prélever les récipients traités (2) à un poste de sortie (6) ;
une seconde roue étoile de transfert (11) capable de tourner autour d'un second axe de rotation (12) qui est parallèle au premier axe (10) et placée à proximité du poste de sortie (6), pour prélever un récipient traité (2) au carrousel (3) et pour l'amener au poste de sortie (6) ;
des moyens de rotation pour entraîner la rotation de la première roue étoile (9) et de la seconde roue étoile (11) ;
le bord de chaque roue étoile formant une pluralité de supports (17) pour accueillir chaque récipient (2), les supports (17) de chaque roue étoile de transfert formant une séquence alternée, le long du bord de la roue étoile, d'au moins deux types différents (19), (20) de supports (17) ; le convoyeur (1) pouvant s'accoupler à un carrousel (3) d'une machine d'actionnement pour acheminer au carrousel et y prélever au moins deux types (19), (20) de récipients (2) avec une forme et/ou une taille différentes qui peuvent être mis respectivement dans un premier type (19) et dans un second type (20) de supports (17);
**caractérisé en ce que** chaque roue étoile est formée d'au moins un disque circulaire qui est coaxial à l'axe de rotation ; chaque support (17) se composant d'une partie d'une surface cylindrique (18) réalisée sur le bord du disque.

2. Convoyeur (1) selon l'une quelconque des revendications précédentes, **caractérisé en ce qu'**il comprend des moyens de synchronisation accouplés à chaque roue étoile pour synchroniser un type sélectionné de support (17) avec les moyens d'écartement (14) et avec le carrousel (3).

3. Convoyeur (1) selon l'une quelconque des revendications précédentes, **caractérisé en ce qu'**il peut s'accoupler à un carrousel (3) capable de tourner autour d'un axe principal de rotation (24), parallèle au premier axe (10) et au second axe (12), et comprenant une pluralité de logements (21) sur le bord du carrousel (3) ; chaque roue étoile pouvant s'accoupler au carrousel (3) de sorte que, dans la pratique, chaque support (17) d'un type se trouve, au moins pendant une période de temps prédéterminée, au niveau d'un logement (21).

4. Convoyeur (1) selon la revendication 3, **caractérisé en ce que**, dans la pratique, la rotation de chaque roue étoile peut être synchronisée avec la rotation du carrousel (3), de sorte que, pendant la rotation, un support (17) d'un type se trouve au niveau d'un premier logement (21), et le prochain support (17) du même type se trouve au niveau d'un second logement après le premier.

5. Convoyeur (1) selon l'une quelconque des revendications précédentes, **caractérisé en ce que** les premiers moyens d'acheminement (7) et/ou les seconds moyens d'acheminement (8) comprennent un tapis convoyeur (13) sur lequel sont positionnés les récipients (2).

6. Convoyeur (1) selon l'une quelconque des revendications précédentes, **caractérisé en ce que** les moyens d'écartement (14) comprennent un distributeur à vis (15) capable de tourner le long d'un troisième axe de rotation (29) qui est transversal au premier axe et au second axe de rotation (12) et essentiellement parallèle à la trajectoire d'acheminement (5).

7. Convoyeur (1) selon la revendication 6, **caractérisé en ce que** le distributeur à vis (15) comprend un canal hélicoïdale (16) avec son propre espacement et sa propre profondeur et largeur de canal ; au moins la profondeur et la largeur de canal (16) étant définies de sorte à pouvoir accueillir les récipients (2) avec une série de différentes formes et/ou tailles.

8. Convoyeur (1) selon les revendications 6 ou 7, **caractérisé en ce qu'**il comprend des moyens de changement accouplés au distributeur à vis (15) pour retirer un distributeur à vis (15) et le remplacer par un autre, en fonction des différents types de récipients (2) à traiter.

9. Convoyeur (1) selon l'une quelconque des revendications précédentes, **caractérisé en ce qu'**il comprend des moyens de guidage (25) pour guider un récipient (2) placé dans un support (17) pendant la rotation de la première roue étoile (9) et/ou de la seconde roue étoile (11).

10. Convoyeur (1) selon la revendication 9, **caractérisé en ce que** les moyens de guidage (25) comprennent un panneau (28) positionné au niveau de la première roue étoile et de la seconde roue étoile (11), le long de la section sur laquelle un récipient (2) est placé dans un support (17) respectivement du poste d'entrée (4) à un carrousel (3) d'une machine d'actionnement et du carrousel (3) au poste de sortie (6) ; le panneau (28) se composant d'une section d'une surface cylindrique centrée sur l'axe de rotation de chaque roue étoile.

11. Convoyeur (1) selon l'une quelconque des revendications précédentes, **caractérisé en ce que** les moyens de rotation comprennent au moins une transmission mécanique raccordée à la première roue étoile et à la seconde roue étoile (11) et pouvant s'accoupler à un système de déplacement du carrousel (3).

12. Convoyeur (1) selon les revendications 2 et 11, caractérisé e ce que les moyens de synchronisation comprennent une pluralité d'éléments mécaniques de fixation pour positionner chaque roue étoile par rapport à l'axe de rotation respectif.

13. Convoyeur (1) selon l'une quelconque des revendications 1 à 10, **caractérisé en ce que** les moyens de rotation comprennent au moins un moteur raccordé à la première roue étoile et/ou à la seconde roue étoile (11) et une unité de commande électronique pour synchroniser la rotation de chaque roue étoile avec la rotation du carrousel (3).

14. Convoyeur (1) selon les revendications 2 et 13, **caractérisé en ce que** les moyens de synchronisation sont inclus dans l'unité de commande électronique.

15. Machine d'actionnement pour traiter des récipients (2), tels que des bouteilles, comprenant un carrousel rotatif (3), **caractérisée en ce qu'**elle comprend aussi un convoyeur (1) selon l'une quelconque des revendications précédentes, accouplé au carrousel (3).
